# EUROPEAN PATENT SPECIFICATION

(11) **EP 4 462 764 B1**
(45) Date of publication and mention of the grant of the patent: **15.04.2026**
(21) Application number: 23881396.8
(22) Date of filing: 15.08.2023
(51) Int. Cl.: H04L 67/141, H04L 67/145, H04M 1/72484, H04M 1/72469, H04M 1/725, H04W 4/16, H04L 65/1069, H04L 65/1096

(54) **CALL CONTROL**
ANRUFSTEUERUNG
COMMANDE D'APPEL

(30) Priority: 24.10.2022 CN 202211302915
(43) Date of publication of application: 13.11.2024
(73) Proprietor: Honor Device Co., Ltd., Shenzhen, Guangdong 518040 (CN)
(72) Inventor: JIANG, Chenyang, Shenzhen, Guangdong 518040 (CN)
(74) Representative: Beder, Jens
(86) International application number: PCT/CN2023/113073
(87) International publication number: WO 2024/087812

(56) References cited:
- CN-A- 107 659 906
- CN-A- 107 659 906
- CN-A- 114 390 138
- CN-A- 114 390 139
- US-A1- 2002 077 089
- US-A1- 2010 103 927

## Description

### TECHNICAL FIELD

This application relates to the field of communication technologies, and in particular, to a call control method and device.

### BACKGROUND

In a scenario such as making a call or answering a call, a user usually encounters a case that a plurality of calls happen at the same time. For example, during a user 2 calling a user 1, a user 3 calls the user 1; or during the user 2 calling the user 1, the user 1 also calls the user 2, or the like. In a similar scenario, because a first call is not established, a call request of a second call is directly rejected, resulting in the second call failure.
The document CN 107 659 906 A shows a method and device for realizing call waiting in mobile communications systems.

### SUMMARY

The present invention is defined by the independent claims. Further advantageous developments are shown by the dependent claims.

This application provides a call control method and device, configured to avoid a missed call in a conflict scenario that multiple calls are made or received concurrently. According to a first aspect, a technical solution provides a call control method, including: A first electronic device receives a first call from a second electronic device at a first time point, and displays a first waiting-for-answering screen, where the first waiting-for-answering screen includes an identifier corresponding to the second electronic device. The first electronic device receives a second call from a third electronic device at a second time point, where the first electronic device does not answer the first call at the second time point, and the second time point is later than the first time point. The first electronic device displays a second waiting-for-answering screen at a third time point when the first electronic device answers the first call, where the second waiting-for-answering screen includes an identifier corresponding to the third electronic device, and the third time point is later than the second time point. The first electronic device answers the second call in response to a first operation on the second waiting-for-answering screen.

In the call control method provided in the foregoing solution, after a new call request is received during an establishment process of the first call, the first call may be waited for establishment completed. After the first call is answered, a newly received second call request may be processed normally and answered. Therefore, that the second call request is directly rejected during the establishment process of the first call can be avoided, and a missed call can be avoided in a scenario of call conflict.

With reference to the first aspect, in some implementations of the first aspect, that the first electronic device answers the first call includes: The first electronic device answers the first call from the second electronic device in response to a second operation on the first waiting-for-answering screen.

With reference to the first aspect, in some implementations of the first aspect, after the first electronic device answers the second call, the method further includes: The first electronic device displays a call screen of the second call. The first electronic device resumes a call with the second electronic device in response to a third operation on the call screen of the second call.

In this implementation, when call waiting is enabled on the first electronic device, after the first call and the second call are answered, a call corresponding to the first call and a call corresponding to the second call may be flexibly switched.

With reference to the first aspect, in some implementations of the first aspect, after the first electronic device receives a second call from a third electronic device at a second time point, the method further includes: The first electronic device and the third electronic device perform first signaling exchange at a fourth time point.

With reference to the first aspect, in some implementations of the first aspect, the first signaling exchange includes complete signaling exchange required to establish a call. The fourth time point is later than the third time point, duration between the fourth time point and the second time point is less than a first waiting threshold, and the first waiting threshold is determined according to a timeout threshold of the second call.

In this implementation, after the first electronic device receives a new call request, a waiting threshold may be set according to a timeout threshold of the call request, and a call with the second electronic device is waited for answering. When the call with the second electronic device is answered before the waiting threshold is reached, a complete response may be performed on the new call request, until a new call is answered.

With reference to the first aspect, in some implementations of the first aspect, the first signaling exchange includes a part of signaling exchange required to establish a call. The fourth time point is later than the second time point, and is earlier than the third time point, duration between the fourth time point and the second time point is equal to a first waiting threshold.

In this implementation, after the first electronic device receives a new call request, a waiting threshold may be set according to a timeout threshold of the call request, and a call with the second electronic device is waited for answering. When the call with the second electronic device is not answered after the waiting threshold is reached, a part of the response may be performed on the new call request.

With reference to the first aspect, in some implementations of the first aspect, after the first electronic device and the third electronic device perform the first signaling exchange at the fourth time point, the foregoing method further includes: The first electronic device and the third electronic device perform second signaling exchange at a fifth time point, where the second signaling exchange includes complete signaling exchange required to establish a call after the first signaling exchange. The fifth time point is later than the third time point, duration between the fifth time point and the fourth time point is less than a second waiting threshold, and the second waiting threshold is determined according to a timeout threshold of a first response.

In this implementation, after the part of response is performed on the new call request, another waiting threshold may be set according to a timeout threshold of a process of the part of response, and the call with the second electronic device is waited for answering. When the call with the second electronic device is answered before the waiting threshold is reached, the complete response may be performed on the new call request, until the new call is answered.

With reference to the first aspect, in some implementations of the first aspect, when the first electronic device does not answer the first call at the third time point, the method further includes: The first electronic device displays the second waiting-for-answering screen at a sixth time point, where the sixth time point is later than the third time point.

In this implementation, after a new call request is received during an establishment process of the first call, the first call may be waited for establishment completed. If the first call times out and is still not answered, the first electronic device may cut off call establishment with the second electronic device, and process a newly received second call request normally and answer the second call. Therefore, that the second call request is directly rejected during the establishment process the first call can be avoided, and a missed call can be avoided in a scenario of call conflict.

With reference to the first aspect, in some implementations of the first aspect, when the first electronic device answers the first call at the third time point, the method further includes: The third electronic device plays a waiting-for-answering alert tone.

In this implementation, when call waiting is enabled on the first electronic device, after the first electronic device receives a new call request, a second call request may be processed normally after a call with the second electronic device is answered, and in this case, the third electronic device may play the waiting-for-answering alert tone.

With reference to the first aspect, in some implementations of the first aspect, when the first electronic device answers the first call at the third time point, the method further includes: The third electronic device plays a busy tone.

In this implementation, when call waiting is enabled on the first electronic device, after the first electronic device receives a new call request, a second call request may be processed normally after a call with the second electronic device is answered, and in this case, the third electronic device may play the busy tone.

With reference to the first aspect, when the first electronic device does not answer the first call at the third time point, the method further includes: The third electronic device plays a waiting-for-answering alert tone at the sixth time point.

In this implementation, after the first electronic device receives a new call request, if a call between the first electronic device and the second electronic device times out and is not answered, the first electronic device may terminate a call connection with the second electronic device, and process the new call request normally. In this case, regardless of whether the call waiting is enabled on the first electronic device, the third electronic device may play the waiting-for-answering alert tone.

According to a second aspect, a technical solution provides a call control method, including: A first electronic device sends a first call to a second electronic device at a first time point, and displays a dialing screen. The first electronic device receives a second call from a third electronic device at a second time point, where the second electronic device does not answer the first call at the second time point, and the second time point is later than the first time point. The first electronic device displays a second waiting-for-answering screen at a third time point when the second electronic device answers the first call, where the second waiting-for-answering screen includes an identifier corresponding to the third electronic device, and the third time point is later than the second time point. The first electronic device answers the second call in response to a first operation on the second waiting-for-answering screen.

In the call control method provided in the foregoing solution, after a new call request is received during an establishment process of the first call, the first call may be waited for establishment completed. After the first call is answered, a newly received second call request may be processed normally and answered. Therefore, that the second call request is directly rejected during the establishment process of the first call can be avoided, and a missed call can be avoided in a scenario of call conflict.

According to a third aspect, a technical solution provides a call control method, including: A first electronic device sends a first call to a second electronic device at a first time point. The second electronic device sends a second call to the first electronic device at a second time point, where the second electronic device does not receive the first call at the second time point, and the second time point is later than the first time point. The first electronic device receives the second call, and displays a first waiting-for-answering screen at a third time point, where the first waiting-for-answering screen includes an identifier corresponding to the second electronic device, and the third time point is later than the second time point. The first electronic device answers the second call in response to a first operation on the first waiting-for-answering screen.

In the call control method provided in the foregoing technical solution, after the first electronic device and the second electronic device send a call request separately and receive a call request from each other, the first electronic device and the second electronic device can select a same call to answer, and at the same time, reject the other call. Therefore, in a scenario that two parties dial each other, that two calls are rejected at the same time can be avoided, and a missed call can be avoided in a scenario of call conflict.

According to a fourth aspect, a technical solution provides a call control system, including: a first electronic device, a second electronic device, and a third electronic device. The first electronic device is configured to receive a first call from the second electronic device at a first time point, and display a first waiting-for-answering screen, where the first waiting-for-answering screen includes an identifier corresponding to the second electronic device. The third electronic device is configured to send a second call to the first electronic device at a second time point, and display a dialing screen, where the first electronic device does not answer the first call at the second time point, and second time point is later than the first time point. The first electronic device is further configured to answer the first call from the second electronic device at a third time point in response to a first operation on the first waiting-for-answering screen, and display a second waiting-for-answering screen, where the second waiting-for-answering screen includes an identifier corresponding to the third electronic device, and the third time point is later than the second time point. The third electronic device is further configured to play a waiting-for-answering alert tone. The first electronic device is further configured to answer the second call in response to a second operation on the second waiting-for-answering screen. The second electronic device is further configured to play a waiting alert tone.

According to the system provided in the foregoing technical solution, after a new call request is received during an establishment process of a first call, the first call may be waited for establishment completed. After the first call is answered, a newly received second call request may be processed normally and answered. Therefore, that the second call request is directly rejected during the establishment process of the first call can be avoided, and a missed call can be avoided in a scenario of call conflict.

According to a fifth aspect, a technical solution provides an electronic device, including: a first receiving unit, configured to receive, a first call from a second electronic device at a first time point, and display a first waiting-for-answering screen in a display unit, where the first waiting-for-answering screen includes an identifier corresponding to the second electronic device; a second receiving unit, configured to receive a second call from a third electronic device at a second time point, where a first electronic device does not answer the first call at the second time point, and the second time point is later than the first time point; the display unit, configured to display a second waiting-for-answering screen when the first call is answered at a third time point, where the second waiting-for-answering screen includes an identifier corresponding to the third electronic device, and the third time point is later than the second time point; and a response unit, configured to answer the second call in response to a first operation on the second waiting-for-answering screen.

According to the electronic device provided in the foregoing technical solution, after a new call request is received during an establishment process of a first call, the first call may be waited for establishment completed. After the first call is answered, a newly received second call request may be processed normally and answered. Therefore, that the second call request is directly rejected during the establishment process of the first call can be avoided, and a missed call can be avoided in a scenario of call conflict.

According to a sixth aspect, a technical solution provides an electronic device, including: one or more processors; a memory; and one or more computer programs. The one or more computer programs are stored in the memory. The one or more computer programs include instructions. When the instructions are executed by the device, the device is enabled to perform the method according to any one of the possible implementations of the first aspect, the second aspect, and the third aspect.

According to a seventh aspect, a technical solution provides an electronic device. The device includes a storage medium and a central processing unit. The storage medium may be a non-volatile storage medium, and a computer-executable program is stored in the storage medium. The central processing unit is connected to the non-volatile storage medium, and executes the computer-executable program to implement the method according to any one of the possible implementations of the first aspect, the second aspect, and the third aspect.

According to an eighth aspect, a technical solution provides a chip. The chip includes a processor and a data interface. The processor reads, via the data interface, instructions stored in a memory, to perform the method according to any one of the possible implementations of the first aspect, the second aspect, and the third aspect.

Optionally, in an implementation, the chip may further include a memory. The memory stores instructions. The processor is configured to execute the instructions stored in the memory. When the instructions are executed, the processor is configured to perform the method according to any one of the possible implementations of the first aspect, the second aspect, and the third aspect.

According to a ninth aspect, a technical solution provides a computer-readable storage medium. The computer-readable medium stores program code to be executed by device. The program code includes instructions for executing the method according to any one of the possible implementations of the first aspect, the second aspect, and the third aspect.

According to the foregoing technical solution, a missed call can be avoided in a conflict scenario that multiple calls are made or received concurrently.

### BRIEF DESCRIPTION OF DRAWINGS

FIG. 1 is a schematic diagram of a call scenario in conventional technologies;
FIG. 2 is a schematic diagram of another call scenario in conventional technologies;
FIG. 3 is a schematic diagram of still another call scenario in conventional technologies;
FIG. 4 is a schematic diagram of a structure of an electronic device according to an embodiment of this application;
FIG. 5 is a schematic flowchart of a call control method according to an embodiment of this application;
FIG. 6 is a schematic diagram of a scenario of a call control method according to an embodiment of this application;
FIG. 7 is a schematic diagram of another scenario of a call control method according to an embodiment of this application;
FIG. 8 is another schematic flowchart of a call control method according to an embodiment of this application;
FIG. 9 is a schematic diagram of another scenario of a call control method according to an embodiment of this application;
FIG. 10 is a schematic diagram of a scenario of a call control method according to an embodiment of this application;
FIG. 11 is a schematic diagram of another scenario of a call control method according to an embodiment of this application;
FIG. 12 is a schematic diagram of another scenario of a call control method according to an embodiment of this application;
FIG. 13 is another schematic flowchart of a call control method according to an embodiment of this application;
FIG. 14 is another schematic flowchart of a call control method according to an embodiment of this application; and
FIG. 15 is a schematic diagram of another structure of an electronic device according to an embodiment of this application.

### DESCRIPTION OF EMBODIMENTS

Before embodiments of this application are described, the related technology is introduced first.

In a process of making a call or answering a call, a user usually encounters a scenario that multiple calls are made or received concurrently. According to the current technical solution, in such a scenario, if a first call is not established, a subsequently received call request is directly rejected, resulting in a missed call.

The following describes possible scenarios in detail.

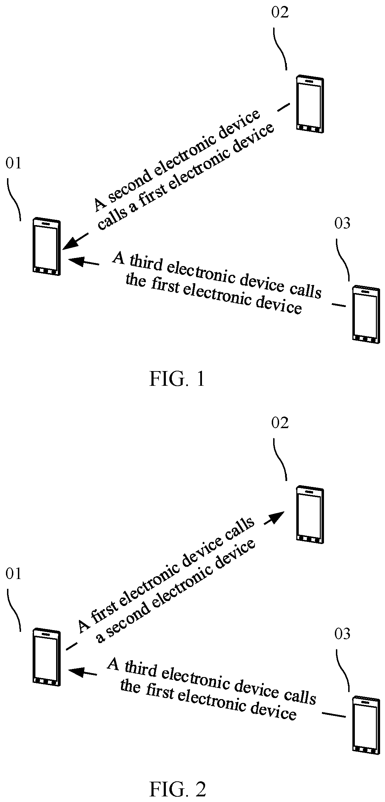

In a possible scenario, as shown in FIG. 1, a scenario shown in FIG. 1 includes a first electronic device 01, a second electronic device 02, and a third electronic device 03. A user A uses the first electronic device 01, a first SIM card is installed on the first electronic device 01, the first SIM card corresponds to a first phone number, and the first phone number may be used as an identifier of the first electronic device. A user B uses the second electronic device 02, a second SIM card is installed on the second electronic device 02, the second SIM card corresponds to a second phone number, and the second phone number may be used as an identifier of the second electronic device. A user C uses the third electronic device 03, a third SIM card is installed on the third electronic device 03, the third SIM card corresponds to a third phone number, and the third phone number may be used as an identifier of the third electronic device. In the scenario shown in FIG. 1, the second electronic device 02 calls the first electronic device 01 first, and the third electronic device 03 also calls the first electronic device 01 before the first electronic device 01 and the second electronic device 02 are connected. With respect to signaling exchange, the second electronic device 02 calling the first electronic device 01 means that the second electronic device 02 sends a call request Invite 1 to the first electronic device 01. The third electronic device 03 calling the first electronic device 01 means that the third electronic device 03 sends a call request Invite 2 to the first electronic device 01. For this call scenario, in the current technical solution, because when the third electronic device 03 calls the first electronic device 01, a call process between the first electronic device 01 and the second electronic device 02 is not established, and the first electronic device 01 and the second electronic device 02 are not connected, the call request Invite 2 sent by the third electronic device 03 is directly rejected by the first electronic device 01. A specific rejecting manner may be that, for example, the first electronic device 01 sends a 603 Decline signaling to the third electronic device 03. The 603 Decline signaling indicates that the first electronic device 01 is busy currently, and cannot answer. Alternatively, it may be another possible rejecting manner, and this is not limited in this application. It may be learned that, according to the current technical solution, in this scenario, a second call may be missed.

Alternatively, in another scenario, as shown in FIG. 2, the first electronic device 01 calls the second electronic device 02 first, and the third electronic device 03 also calls the first electronic device 01 before the first electronic device 01 and the second electronic device 02 are connected. In this case, similar to the foregoing scenario, the call request Invite 2 sent by the third electronic device 03 is directly rejected by the first electronic device 01. In this scenario, the second call may also be missed.

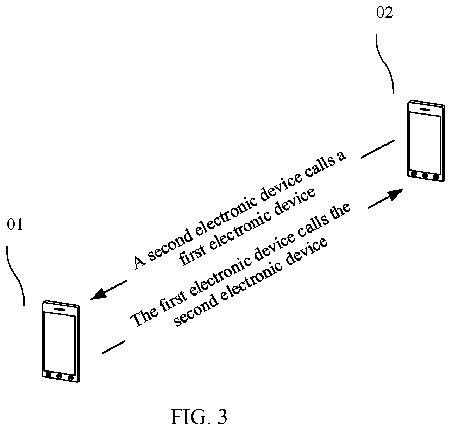

In another possible scenario, as shown in FIG. 3, the first electronic device calls the second electronic device first, and the second electronic device also calls the first electronic device before receiving the first call request Invite 1 sent by the first electronic device. Therefore, the first electronic device and the second electronic device both receive a call sent by each other after sending a call. Therefore, the call sent by the first electronic device is directly rejected by the second electronic device, and the call sent by the second electronic device is directly rejected by the first electronic device. It may be learned that, according to the current technical solution, in this scenario, two parties establish a call in failure.

This application is provided based on a problem of a missed call in the foregoing possible scenarios.

In this application, after the first electronic device that is in a target state receives a second call request, the second call request is not directly rejected, and a waiting threshold is set to wait for the current target state to end. The target state may be a called state or a calling state. If the target state ends before the waiting threshold is reached, the first electronic device may perform a call establishment process for the second call request normally. The end of the target state may be that, the called state or the calling state is switched to an answering state, that is, the call is answered, and two parties of the call start to communicate. Alternatively, the called state or the calling state is switched to a hang up state.

In the foregoing technical solution, when an electronic device receives another call request during an establishment process of a first call, performing call establishment process may be waited to end based on the waiting threshold. As long as the establishment process of the first call ends before the waiting threshold is reached, the electronic device can respond to a newly received call request normally. Therefore, that the second call is directly rejected can be avoided.

The following describes the technical solutions in this application with reference to accompanying drawings.

The call control method provided in embodiments of this application can be applied to any electronic device having a communication function, for example, a mobile phone and a fixed-line phone. A specific type of the electronic device is not limited in embodiments of this application. The communication function expressed in this application includes a communication function implemented based on a session initiation protocol (Session Initiation Protocol, SIP).

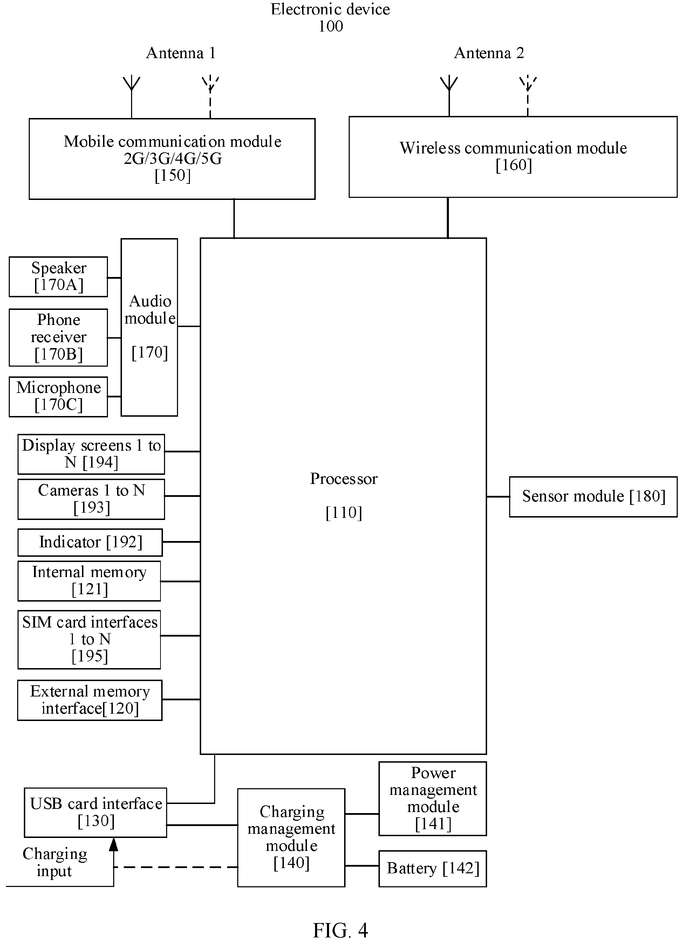

For example, FIG. 4 is a schematic diagram of a structure of an electronic device 100 according to an embodiment of this application. The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a phone receiver 170B, a microphone 170C, a sensor module 180, an indicator 192, a camera 193, a display screen 194, a subscriber identification module (subscriber identification module, SIM) card interface 195, and the like. There are a plurality of microphones 170C.

It may be understood that a schematic structure in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components in the figure may be implemented by hardware, software, or a combination of software and hardware.

The processor 110 may include one or more processing units. For example, the processor 110 may include an application processor (application processor, AP), a modem processor, a controller, a video codec, a digital signal processor (digital signal processor, DSP), a baseband processor, and/or a neural-network processing unit (neural-network processing unit, NPU), and the like. Different processing units may be separate components, or may be integrated into one or more processors.

The controller may be a nerve center and a command center of the electronic device 100. The controller may generate an operation control signal based on an instruction operation code and a timing signal, to control instruction fetching and instruction execution.

A memory configured to store instructions and data may be further disposed in the processor 110. In some embodiments, the memory in processor 110 is a cache. The memory may store instructions or data recently used or cyclically used by the processor 110. When needing to use the instructions or the data again, the processor 110 may directly call the instructions or the data from the memory. This avoids repeated accessing and reduces a wait time for the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2S interface may be configured to perform audio communication. In some embodiments, the processor 110 may include a plurality of I2S buses. The processor 110 may be coupled to the audio module 170 through the I2S bus to implement communication between the processor 110 and the audio module 170. In some embodiments, the audio module 170 may transfer an audio signal to the wireless communication module 160 via the I2S interface, to implement a function of answering a call.

The PCM interface may also be configured to perform audio communication, and sample, quantize, and encode an analog signal. In some embodiments, the audio module 170 may be coupled to the wireless communication module 160 via a PCM bus interface. In some embodiments, the audio module 170 may also transfer an audio signal to the wireless communication module 160 via the PCM interface, to implement the function of answering a call.

It may be understood that a schematic interface connection relationship between the modules in embodiments of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The internal memory 121 may be configured to store computer-executable program code. The executable program code includes instructions. The internal memory 121 may include a program storage area and a data storage area. The program storage area may store an operating system, an application required by at least one function (for example, a call control function), and the like. The data storage area may store data (such as timing data of timing process) created in a use process of the electronic device 100 and the like. In addition, the internal memory 121 may include a high-speed random access memory, and may also include a non-volatile memory, for example, at least one magnetic disk storage device, a flash memory device, a universal flash storage (universal flash storage, UFS), and the like. The processor 110 runs the instructions stored in the internal memory 121, and/or the instructions stored in the memory disposed in the processor, to perform various functional applications and data processing of the electronic device 100.

The electronic device 100 may implement an audio function by using the audio module 170, the speaker 170A, the phone receiver 170B, the microphone 170C, the headset jack 170D, the application processor, and the like, for example, making or receiving a call.

For ease of understanding, in the following embodiments of this application, for example, the electronic device having the structure shown in FIG. 4 is used with reference to application scenarios shown in FIG. 1, FIG. 2, and FIG. 3 to specifically describe the call control method provided in embodiments of this application.

For the call scenario shown in FIG. 1, a call control method provided in embodiments of this application is as the following.

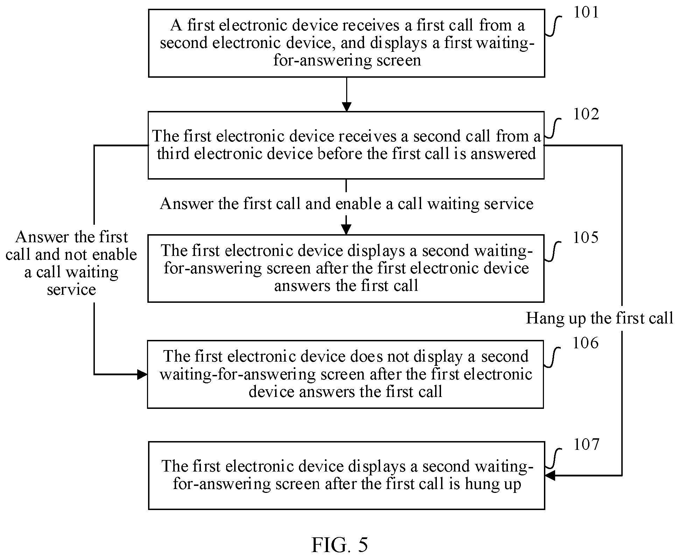

FIG. 5 is a schematic flowchart of a call control method according to an embodiment of this application. As shown in FIG. 5, the call control method provided in this embodiment of this application includes the following steps.

101: A first electronic device receives a first call from a second electronic device, and displays a first waiting-for-answering screen.

For example, a user of the first electronic device may be a user A, and a user of the second electronic device may be a user B. After the user B dials a phone number of the user A by using the second electronic device, the second electronic device initiates a first call to the first electronic device. For example, that the second electronic device initiates a first call to the first electronic device may include: The second electronic device sends a first call request to the first electronic device.

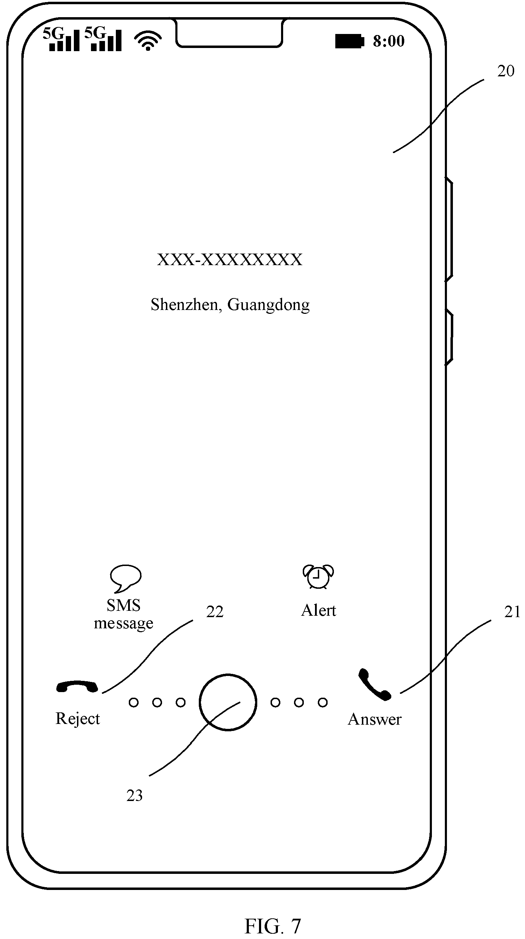

As shown in FIG. 7, after receiving the first call initiated by the second electronic device, the first electronic device may display a first waiting-for-answering screen 20. The first waiting-for-answering screen 20 may include an answer button 21, a reject button 22, a slide button 23, and identifier information of the second electronic device. An identifier corresponding to the second electronic device may be a phone number of the second electronic device.

The first electronic device may answer the first call between the first electronic device and the second electronic device in response to an answer operation performed by the user. With reference to FIG. 7, the answer operation performed by the user may be an operation that the user presses the slide button 23 and slides to the answer button 21.

The first electronic device may reject the first call from the second electronic device in response to a reject operation performed by the user. With reference to FIG. 7, the reject operation performed by the user may be an operation that the user presses the slide button 23 and slides to the reject button 22.

Optionally, the answer operation may be tapping the answer button 21, or other voice instruction or gesture instruction. The reject operation may be tapping the reject button 22, or other voice instruction or gesture instruction.

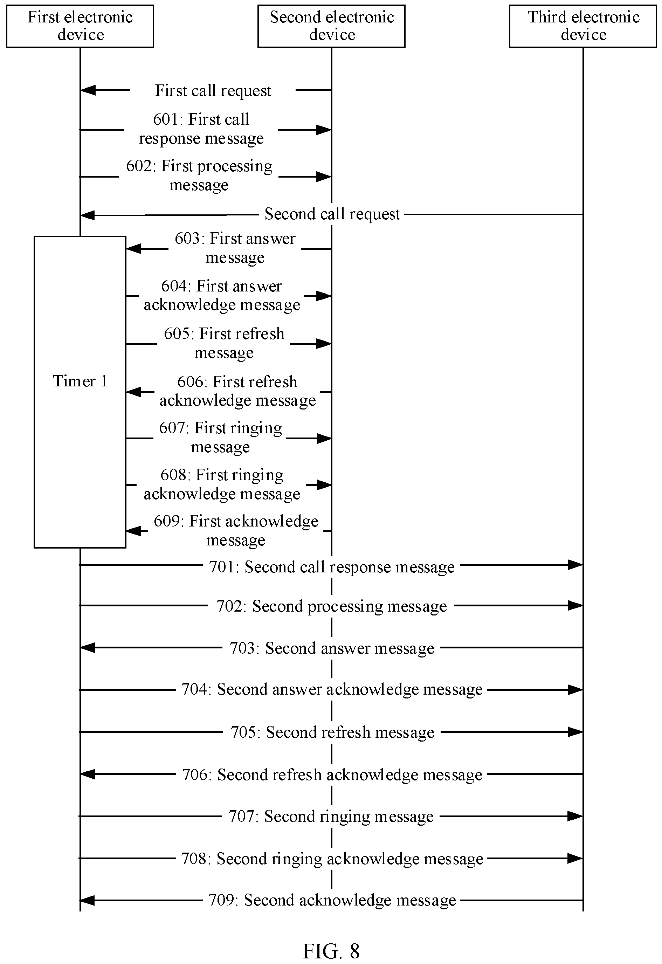

It should be noted that, with respect to the signaling exchange, after the first electronic device receives the first call from the second electronic device, a session is established between the first electronic device and the second electronic device. A process of establishing a session is described as an example herein, as shown in FIG. 8, the process of establishing a session includes step 601 to step 609.

601: A first electronic device sends a first call response message to a second electronic device.

The first call response message is a response message of the first electronic device for a first call request. For example, the first call response message may be a 100 trying message. The 100 trying message may indicate that the first call request is received. The 100 trying message is an unreliable response message. In other words, regardless of whether the second electronic device successfully receives the 100 trying message, the first electronic device and the second electronic device does not perform a second handshake for the 100 trying message.

602: The first electronic device sends a first processing message to the second electronic device.

In an actual scenario, for any call request, parameter information carried in the call request further includes voice/video codec capability information supported by a device, and a current resource reservation state of the device. The voice/video codec capability information supported by the device may be, for example, adaptive multi-rate (Adaptive Multi-Rate, AMR) codec, adaptive multi-rate-wideband (Adaptive Multi-rate-Wideband, AMR-WB) codec, and/or, enhance voice services (Enhance Voice Services, EVS) codec. The current resource reservation state of the device may be, for example, not ready, send only, receive only, or send and receive.

After the first electronic device receives the first call request, codec capability information that a local device expects to use may be selected from the voice/video codec capability supported by the device carried in the first call request. In addition, a resource reservation state of the local device may be refreshed according to resource reservation state information carried in the first call request.

In the foregoing processing process, the first electronic device may send the first processing message to the second electronic device. The first processing message may be a 183 process message, and the 183 process message may indicate being processed.

603: The first electronic device receives a first answer message sent by the second electronic device.

The first answer message may be a PRACK message. The PRACK message is an answer message of the second electronic device for the 183 process message sent by the first electronic device, and may indicate that the second electronic device receives the 183 process message.

604: The first electronic device sends a first answer acknowledge message to the second electronic device.

The first answer acknowledge message may be a 200 OK message. The 200 OK message here is used as an answer for the PRACK message, and may indicate that the first electronic device determines that the PRACK message sent by the second electronic device is received.

605: The first electronic device sends a first refresh message to the second electronic device.

The first refresh message may be an UPDATE message. The UPDATE message may indicate that refresh of the resource reservation state of the first electronic device is completed.

606: The first electronic device receives a first refresh acknowledge message sent by the second electronic device.

The first refresh acknowledge message may be a 200 OK message. The 200 OK message here is an answer of the second electronic device to the UPDATE message, and indicates that the second electronic device determines that the UPDATE message is received, and a voice or video call may be started.

607: The first electronic device sends a first ringing message to the second electronic device.

The first ringing message may be a 180 Ringing message. The 180 Ringing message may be for informing the second electronic device to start to play a ring back tone, that is, a waiting-for-answering alert tone. At the same time, the first electronic device starts to ring.

608: The first electronic device sends a first ringing acknowledge message to the second electronic device.

The first ringing acknowledge message may be a 200 OK message. The first electronic device sends the 200 OK message to the second electronic device in response to a trigger operation performed on an answer button 21 by a user.

609: The first electronic device receives a first acknowledge message sent by the second electronic device.

The first acknowledge message is an ACK message for the 200 OK message. The ACK message may indicate that the second electronic device receives the 200 OK message sent by the first electronic device. In this case, a call establishment process corresponding to the first call request ends, and a call between the two parties is officially answered.

In step 601 to step 609, a complete process of establishing a session is described. In embodiments of this application, before step 609, the first electronic device receives a second call from the third electronic device. In other words, the first electronic device receives the second call when the first call is not answered, that is, step 102.

102: The first electronic device receives the second call from the third electronic device before the first call is answered.

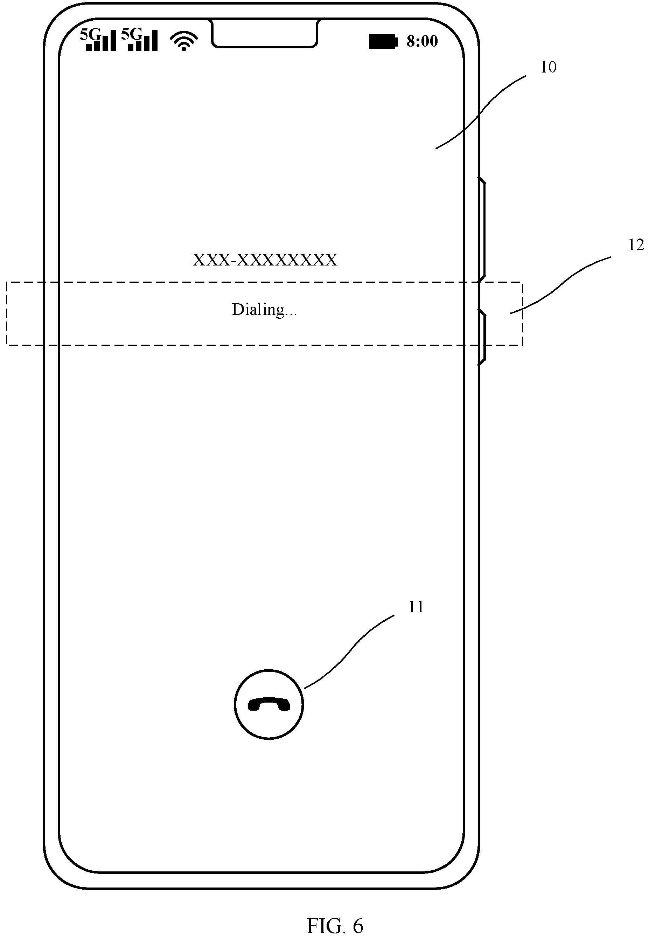

In embodiments of this application, after the second electronic device initiates the first call to the first electronic device, as shown in FIG. 6, the second electronic device may display a dialing screen 10. The dialing screen 10 may include a hanging up button 11 and alter information 12 of "dialing".

With reference to screens in FIG. 6 and FIG. 7, after the first electronic device receives the second call, because the first call is not answered, the first electronic device does not display the second call. In this case, after the second call is received, a user A may answer the first call on the first electronic device, or does not answer the first call.

If the user A answers the first call on the first electronic device, after step 102, step 103 and step 104 may be performed.

Specifically, if the user A receives the first call on the first electronic device, and a call waiting service is enabled on a first phone number corresponding to a first SIM card, step 103 is performed, and the first electronic device displays a second waiting-for-answering screen. Reversely, if the user A receives the first call on the first electronic device, and a call waiting service is not enabled on a first phone number corresponding to a first SIM card, step 104 is performed, and the first electronic device does not display a second waiting-for-answering screen.

If the first call is hung up, after step 102, step 105 may be performed, and the first electronic device displays the second waiting-for-answering screen. Specifically, if the first call is hung up, and the call waiting service is enabled on the first phone number corresponding to the first SIM card, step 105 is performed. If the first call is hung up, and the call waiting service is not enabled on the first phone number corresponding to the first SIM card, step 105 is also performed. In other words, regardless of whether the call waiting service is enabled on the first phone number corresponding to the first SIM card, if the first call is hung up, step 105 is performed.

In a possible scenario, the first call being hung up may be that the user A hangs up the first call on the first electronic device. Specifically, as shown in FIG. 7, the first electronic device may hang up on the second electronic device in response to a trigger operation performed by the user on the reject button 22 on the first waiting-for-answering screen 20, and the call between the two parties is hung up.

In another possible scenario, the first call being hung up may alternatively be that a user B hangs up the first call on the second electronic device. Specifically, the second electronic device may hang up on the first electronic device in response to a trigger operation performed by the user on the hanging up button 11 on the dialing screen 10 as shown in FIG. 6, and the call between the two parties is hung up.

In still another possible scenario, the first call being hung up may alternatively be that the first call times out and hangs up automatically. A manner of the first electronic device determining that the first call times out may be that, for example, receiving a notification message that is delivered by a network side and that represents that the call times out, or receiving a signaling that is sent by the second electronic device and that represents that the call times out.

It should be noted that, the call waiting service means that the user A is allowed to answer or make a call to a user C during a call with any user B, to implement a service to switch between two calls.

With respect to the signaling exchange, after receiving a first call request from the second electronic device, the first electronic device may perform the foregoing session establishment processes 601 to 609 of a call process with the second electronic device according to the SIP protocol.

Before the first call is answered, or it may be understood that before the first call is established, in other words, before the foregoing session process 609 is completed, a third electronic device initiates a second call to the first electronic device. For example, a user of the first electronic device may be a user A, and a user of the third electronic device may be a user C. After the user C dials a phone number of the user A by using the third electronic device, the third electronic device initiates a second call to the first electronic device. For example, that the third electronic device initiates a second call to the first electronic device may include: The third electronic device sends a second call request to the first electronic device. In this case, similar to FIG. 6, the third electronic device may display a dialing screen. A hanging up button and alter information of "dialing" are displayed on the dialing screen.

In the foregoing process, during a call establishment process between the first electronic device and the second electronic device, after the first electronic device receives a new call request, a current call scenario may be determined according to the following method, to determine that the current call scenario is the call scenario shown in FIG. 1.

Specifically, in an actual scenario, for any call request, a plurality of pieces of parameter information are carried. The plurality of pieces of parameter information include calling information from and called information to. Based on this, in embodiments of this application, after the first electronic device receives a new call request, second parameter information carried in the new call request is compared with first parameter information carried in the first call request. The first parameter information may include first calling information and first called information. The second parameter information may include second calling information and second called information.

When the first electronic device detects that the first calling information is different from the second calling information, and the first called information is the same as a second information number, it may be determined that the new call request is from the third electronic device that is different from the second electronic device, and the first electronic device determines that a current scenario is the call scenario shown in FIG. 1.

In another implementation, when the first electronic device detects that the first calling information is the same as the second calling information, and the first called information is the same as the second called information. In this case, the first electronic device may determine that a call request is repeatedly delivered, and determine that a current scenario belongs to a network error scenario. Alternatively, the first electronic device detects that the first called information is different from the second called information. In this case, the electronic device can determine that a target address of the second call request is wrong, and determine that this belongs to the network error scenario. When the network error is determined, the first electronic device may directly reject a new call request. According to the implementation, a behavior that the first electronic device directly reject the second call may be limited to a situation of network error, so that a normal concurrent call being directly rejected can be avoided.

After it is determined that the first electronic device is in the call scenario shown in FIG. 1, the first electronic device may temporarily not respond to the second call request from the third electronic device, and a first waiting threshold Timer 1 is determined according to a timeout threshold of a call request and timing starts. The first waiting threshold Timer 1 may be used for waiting for the first call to end. In actual scenario, in a general situation, when the timeout threshold is reached without responding to the call request, the call request is automatically rejected. To prevent such a response timeout from occurring, in embodiments of this application, a value of the first waiting threshold Timer 1 may be set to be less than the timeout threshold of the call request. For example, it is assumed that the timeout threshold of the call request is 10s, the value of the first waiting threshold Timer 1 may be set to 8s.

If the first call between the first electronic device and the second electronic device ends before waiting duration reaches the first waiting threshold Timer 1, the first electronic device can respond to the second call request from the third electronic device normally. The responding to the second call request from the third electronic device normally may include: The first electronic device and the third electronic device perform the following signaling exchange processes 701 to 709 described in step 103.

If the first call between the first electronic device and the second electronic device does still not end when the waiting duration reaches the first waiting threshold Timer 1, to avoid the second call request being automatically rejected because a second call request response times out, in embodiments of this application, the first electronic device and the third electronic device may first perform a part of the signaling exchange process in the following step 701 to step 709. In embodiments of this application, for ease of understanding, the part of the signaling exchange process performed by the first electronic device and the third electronic device is described as a first sub-process.

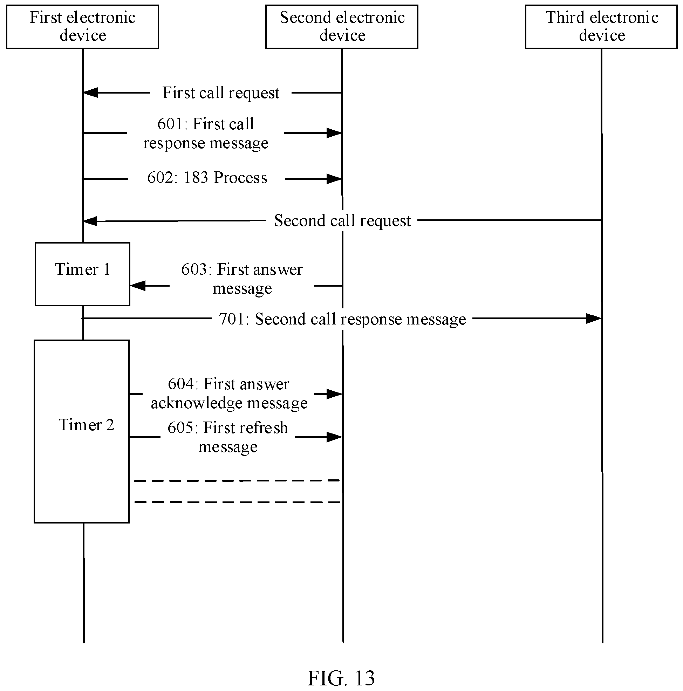

In a possible implementation, as shown in FIG. 13, the first sub-process may include a signaling exchange process. Specifically, the first sub-process may include the foregoing signaling exchange process 701. The first electronic device sends a second call response message to the third electronic device.

In another implementation, the first sub-process may include a plurality of signaling exchange processes. For example, the first sub-process may include the foregoing signaling exchange processes 701 and 702 at the same time.

In an actual performing process, the first sub-process may further include more signaling exchange processes. This is not limited in this application. It should be understood that, because of limitation of a radio frequency module hardware capability in the electronic device, the electronic device cannot establish corresponding voice bearers for two calls at the same time. Therefore, establishment of the second voice bearer should be based on completion of establishment of the first voice bearer. In an actual scenario, timing of establishment of a voice bearer is usually when a 180 Ringing message is sent. In other words, after a 180 Ringing response is executed, it may be determined that the voice bearer is started to be established. Therefore, in embodiments of this application, the first sub-process performed by the first electronic device and the third electronic device may include any one or more signaling exchange processes before the foregoing signaling exchange process 707 (to be specific, the first electronic device sends a second ringing message to the third electronic device).

Further, after the first electronic device performs the foregoing first sub-process for the second call request, in embodiments of this application, to continue to wait for the first call currently between the first electronic device and the second electronic device to end, as shown in FIG. 13, a second waiting threshold Timer 2 may be determined again and timing starts.

Similar to the foregoing first waiting threshold Timer 1, a value of the second waiting threshold Timer 2 may be determined according to a waiting duration threshold of a latest signaling exchange process. In embodiments of this application, the foregoing first sub-process including step 701 is used as an example for description. In this case, the latest signaling exchange process is that the first electronic device sends the second call response message to the third electronic device. To avoid the call establishment failing due to the second call response message reaching the timeout threshold, the value of the second waiting threshold Timer 2 may be less than a timeout threshold of the second call response message. For example, it is assumed that the timeout threshold of the second call response message is 10s, the value of the second waiting threshold Timer 2 may be set to 8s.

Similar to the foregoing descriptions, before it is determined that the waiting duration reaches the second waiting threshold Timer 2, when the first call between the first electronic device and the second electronic device ends, the first electronic device can respond the second call from the third electronic device normally. With respect to the signaling exchange, the first electronic device can normally perform a subsequently complete signaling exchange process with the third electronic device. It may be understood that, because the first sub-process is in a performed state in this case, the subsequently complete signaling exchange process here does not include the foregoing first sub-process that is performed.

Reversely, before it is determined that the waiting duration reaches the second waiting threshold Timer 2, when the first call between the first electronic device and the second electronic device does still not end, the first electronic device may continue to perform a part of the signaling exchange process with the third electronic device when the waiting duration reaches the second waiting threshold Timer 2. In embodiments of this application, the part of the signaling exchange process performed herein is described as a second sub-process. Similar to the foregoing first sub-process, the second sub-process may include one or more signaling exchange processes after the first sub-process and before the signaling exchange process 707 (to be specific, the first electronic device sends the second ringing message to the third electronic device). For example, the second sub-process may still include that the first electronic device sends the second processing message to the third electronic device.

After the second sub-process for the first call request is performed, in embodiments of this application, to continue to wait for the first call currently between the first electronic device and the second electronic device to end, a third waiting threshold Timer 3 may be determined again and timing starts. Reference may be made to the foregoing first waiting threshold Timer 1 and the second waiting threshold Timer 2. Details are not described again.

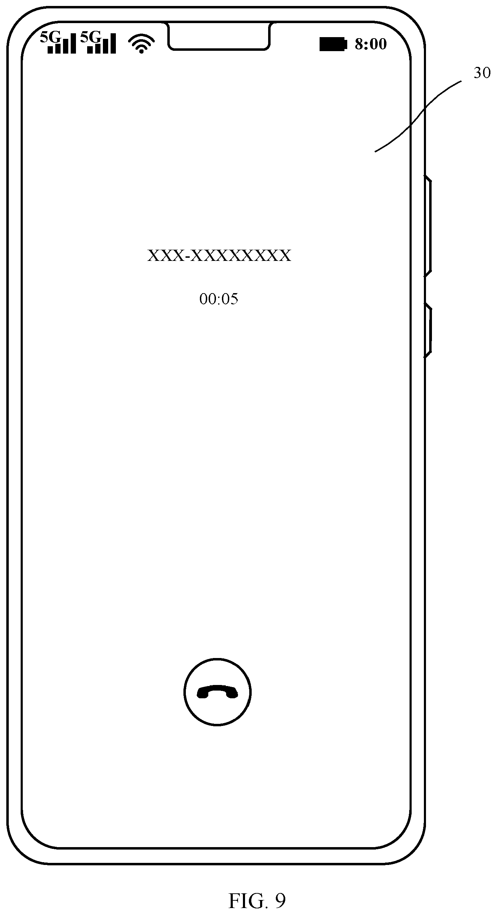

It should be noted that, in embodiments of this application, the end of the first call between first electronic device and the second electronic device may be, as shown in FIG. 8, the signaling exchange processes 601 to 609 corresponding to the first call are completed, in this case, the user A answers, on the first electronic device, the first call initiated by the second electronic device. After the first electronic device connects the second electronic device, as shown in FIG. 9, the first electronic device may display a first call screen 30 with the second electronic device. An identifier corresponding to the second electronic device, and call duration between the first electronic device and the second electronic device may be displayed on the first call screen 30.

The end of the first call between the first electronic device and the second electronic device may alternatively be that the first call is hung up. That the first call is hung up may include the foregoing descriptions of being hung up by the user A on the first electronic device, being hung up by the user B on the second electronic device, and being hung up automatically due to timeout.

103: The first electronic device displays the second waiting-for-answering screen after the first electronic device answers the first call.

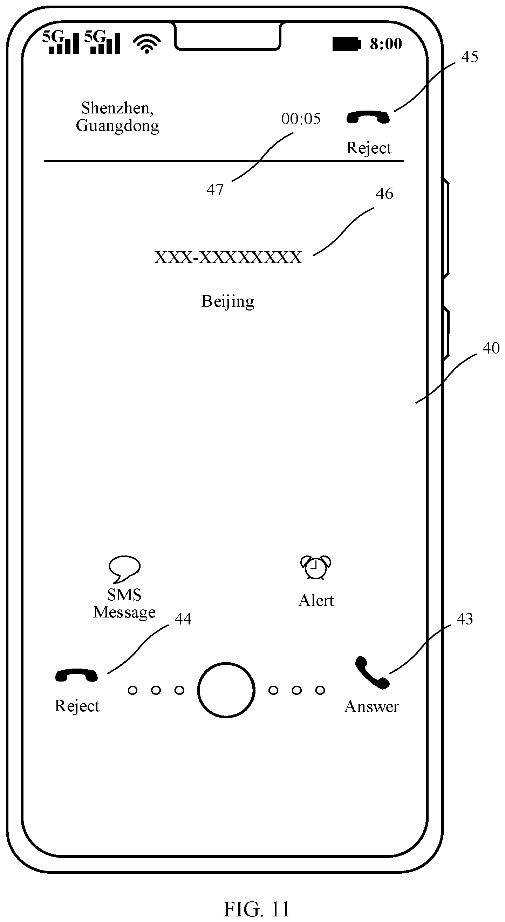

For example, as shown in FIG. 11, if the end of the first call between the above first electronic device and the second electronic device is that the call between the two parties is answered, when a call waiting function is enabled on the first electronic device, the first electronic device may maintain the first call, and display a second waiting-for-answering screen 40. The second waiting-for-answering screen 40 may include an answer button 43, a first reject button 44, a second reject button 45, an identifier 46 corresponding to the third electronic device, and call duration 47 with the second electronic device.

The answer button 43 may be configured to answer a call with the third electronic device. The first reject button 44 may be configured to reject the call with the third electronic device. The second reject button 45 may be configured to reject to maintain the call with the second electronic device.

Further, the first electronic device may answer the call with third electronic device in response to a trigger operation performed on the answer button 43 on the second waiting-for-answering screen 40 by a user, and at the same time, maintain the call with second electronic device. In this case, the second electronic device is in a call waiting state. Alternatively, the first electronic device may reject the call with the third electronic device in response to a trigger operation performed by the user on the first reject button 44 on the second waiting-for-answering screen 40, and at the same time, retain the call with the second electronic device. In this case, the second electronic device is in an answering state. Alternatively, the first electronic device may hang up the call with the second electronic device in response to a trigger operation performed by the user on the second reject button 45 on the second waiting-for-answering screen 40.

Further, after the call between the first electronic device and the third electronic device is answered, when the first electronic device still retains the call with the second electronic device, the first electronic device may switch between the second electronic device and the third electronic device based on the call waiting function, to call to different objects.

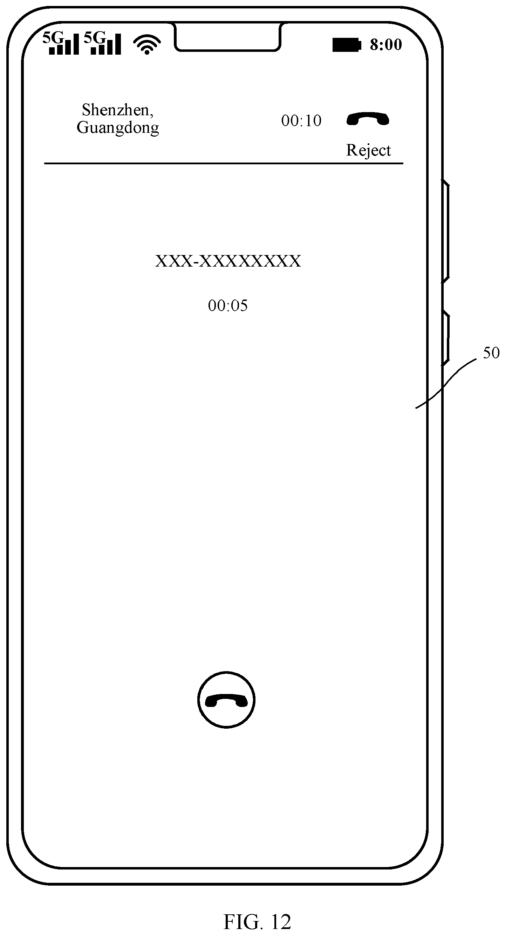

Specifically, after the call between the first electronic device and the third electronic device is answered, as shown in FIG. 12, the first electronic device may display a second call screen 50 with the third electronic device. The second call screen 50 may include an identifier corresponding to the third electronic device and an identifier corresponding to the second electronic device. The first electronic device may switch a call object in response to trigger operations of the user for identifiers of different electronic devices on the second call screen 50. For example, the first electronic device may resume the call with the second electronic device in response to a trigger operation performed by the user on the identifier corresponding to the second electronic device on the second call screen 50.

If the first call between the first electronic device and the second electronic device is answered, with respect to the signaling exchange, as shown in FIG. 8, the first call being answered may be that the signaling exchange processes 601 to 609 are completed. The first electronic device may start to respond the second call from the third electronic device. With respect to the signaling exchange, as shown in FIG. 8, the responding the second call from the third electronic device may include performing the signaling exchange processes 701 to 709 with the third electronic device, specifically as follows.

701: The first electronic device sends a second call response message to the third electronic device.

The second call response message is a 100 trying message. The 100 trying message is a response message for a second call request, and the 100 trying message may indicate that the second call request is received.

702: The first electronic device sends a second processing message to the third electronic device.

After the first electronic device receives the second call request, codec capability information that a local device expects to use may be selected from voice/video codec capability supported by a device carried in the second call request. In addition, a resource reservation state of the local device may be refreshed according to resource reservation state information carried in the second call request.

In the foregoing processing process, the first electronic device may send the second processing message to the third electronic device. The second processing message may be a 183 process message. The 183 process message may indicate being processed.

703: The first electronic device receives a second answer message sent by the third electronic device.

The second answer message is a PRACK message. The PRACK message is an answer message of the third electronic device for the 183 process message sent by the first electronic device, and may indicate that the third electronic device receives the 183 process message.

704: The first electronic device sends a second answer acknowledge message to the third electronic device.

The second answer acknowledge message is a 200 OK message for the PRACK message. The 200 OK message here is used as an answer to the PRACK message, and may indicate that the first electronic device determines that the PRACK message sent by the third electronic device is received.

705: The first electronic device sends a second refresh message to the third electronic device.

The second refresh message is an UPDATE message. The UPDATE message may indicate that refresh of a resource reservation state of the first electronic device is completed.

706: The first electronic device receives a second refresh acknowledge message sent by the third electronic device.

The second refresh acknowledge message may be a 200 OK message for the UPDATE message. The 200 OK message here is an answer of the third electronic device to the UPDATE message, and indicates that the third electronic device determines that the UPDATE message is received, and a voice or video call may be started.

707: The first electronic device sends a second ringing message to the third electronic device.

The second ringing message may be a 180 Ringing message. The 180 Ringing message may be for informing the third electronic device to start to play a ring back tone, that is, a waiting-for-answering alert tone. At the same time, the first electronic device starts to ring.

708: The first electronic device sends a second ringing acknowledge message to the third electronic device.

The second ringing acknowledge message may be a 200 OK message.

709: The first electronic device receives a second acknowledge message sent by the third electronic device.

The second acknowledge message may be an ACK message for the 200 OK message.

104: The first electronic device does not display the second waiting-for-answering screen after the first electronic device answers the first call.

If the foregoing end of the call establishment process between the first electronic device and the second electronic device is that the call between the two parties is answered, and a call waiting service is not enabled on the first electronic device, the third electronic device may play an engaged alert tone. In this case, the third electronic device may hang up the call with the first electronic device in response to a hang up operation.

105: The first electronic device displays the second waiting-for-answering screen after the first call is hung up.

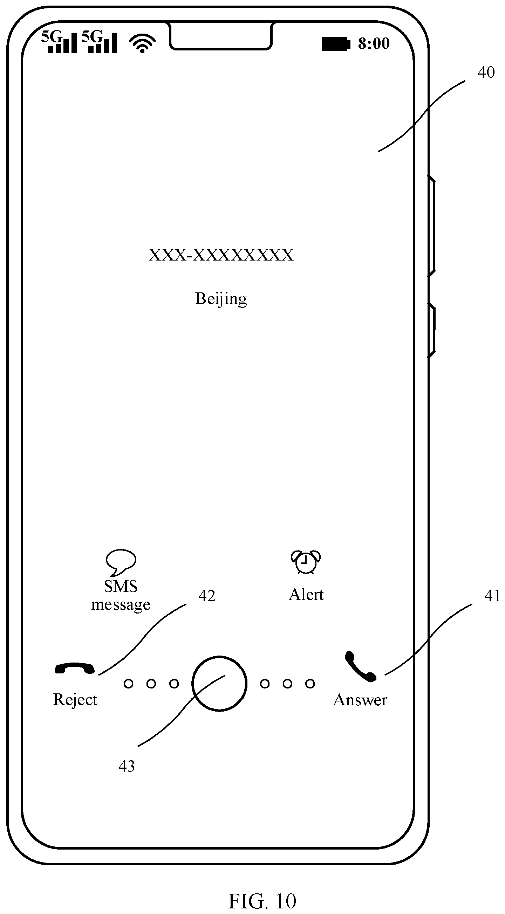

If the foregoing end of the first call between the first electronic device and the second electronic device is that the first call is hung up, as shown in FIG. 10, the second waiting-for-answering screen 40 may include an answer button 41, a reject button 42, a slide button 43, and an identifier corresponding to the third electronic device. The identifier corresponding to the third electronic device may include a phone number of the third electronic device. Further, the first electronic device may answer the second call from the third electronic device in response to an answer operation performed by the user. The answer operation performed by the user may be an operation that the user presses the slide button 43 and slides to the answer button 41. With respect to a signaling, the first electronic device may send the 200 OK message to the third electronic device in response to a trigger operation performed by the user on the answer button 41 on the second waiting-for-answering screen 40. The third electronic device may send the ACK message to the first electronic device after receiving the 200 OK message. The ACK message may indicate that the third electronic device receives the 200 OK message sent by the first electronic device. In this case, a call establishment process corresponding to the second call request ends, and a call between the two parties is officially answered. The first electronic device may further reject the second call from the third electronic device in response to a reject operation performed by the user. The reject operation performed by the user may be an operation that the user presses the slide button 43 and slides to the reject button 42.

Optionally, the answer operation may be tapping the answer button 41, or other voice instruction or gesture instruction. The reject operation may be tapping the reject button 42, or other voice instruction or gesture instruction.

After the first electronic device connects the third electronic device, the first electronic device may display a third call screen with the third electronic device. Similar to the first call screen 30 shown in FIG. 9, the third call screen may include an identifier corresponding to the third electronic device, and call duration between the first electronic device and the third electronic device.

It should be noted that, in embodiments of this application, alternatively, step 101 may alternatively be that the first electronic device sends a first call to the second electronic device. In this case, a currently corresponding call scenario may be a call scenario shown in FIG. 2. In the call scenario shown in FIG. 2, the first electronic device, as a calling device, sends a first call request to the second electronic device first, and establishes a session. In a session establishment process, the first electronic device further receives a call request from another electronic device, that is, a second call request sent by the third electronic device.

Similar to the foregoing descriptions, a method that the first electronic device determines being in the call scenario shown in FIG. 2 may be that first parameter information carried in the first call request is compared with second parameter information carried in the second call request. The first parameter information may include first calling information and first called information. When the first electronic device detects that the first calling information is the same as second called information, and the first called information is different from second calling information, it is determined that a current scenario is the call scenario shown in FIG. 2.

In the foregoing technical solution, if the first electronic device receives a new call request during performing the call establishment process, the current call establishment process may be waited to end based on a waiting threshold. Further, after the current call establishment process ends, the electronic device may process the newly received call request normally. According to the foregoing technical solution, a missed call can be avoided in a scenario that multiple calls are made or received concurrently.

In another call scenario, as shown in FIG. 3, the first electronic device, as the calling device, sends a first call request to the second electronic device first. Before the first call request is received by the second electronic device, the second electronic device also sends a second call request to the first electronic device. For a call scenario shown in FIG. 3, embodiments of this application may provide another call control method as follows.

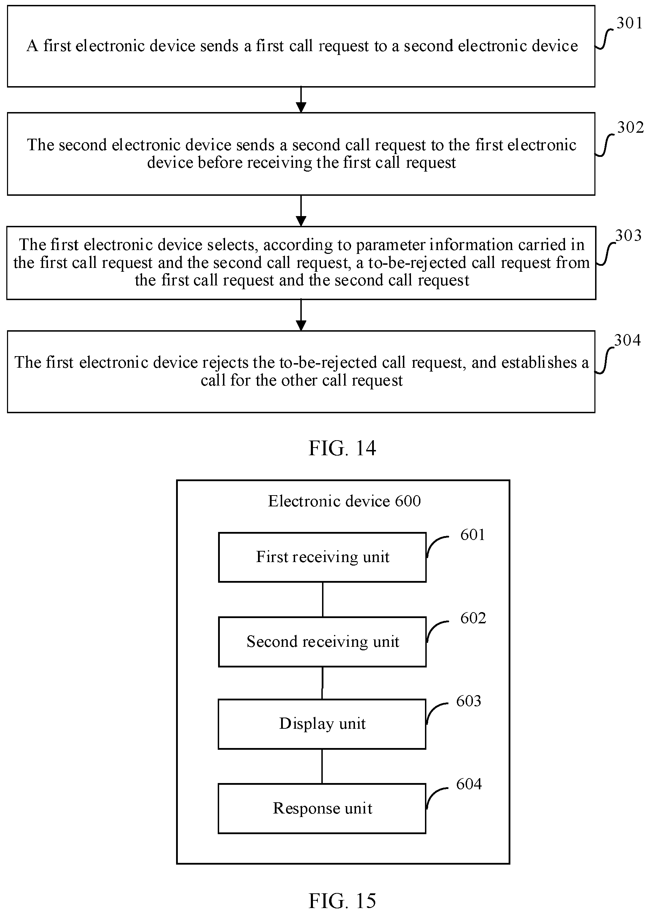

FIG. 14 is another schematic flowchart of a call control method according to an embodiment of this application. As shown in FIG. 14, the call control method provided in this embodiment of this application includes the following steps.

301: A first electronic device sends a first call request to a second electronic device.

302: The second electronic device sends a second call request to the first electronic device before receiving the first call request.

303: The first electronic device selects, according to parameter information carried in the first call request and the second call request, a to-be-rejected call request from the first call request and the second call request.

304: The first electronic device rejects the to-be-rejected call request, and establishes a call for the other call request.

In embodiments of this application, when the first electronic device receives the second call request after sending the first call request to the second electronic device, the first electronic device may compare first parameter information carried in the first call request with second parameter information carried in the second call request. The first parameter information may include first calling information and first called information. The second parameter information may include second calling information and second called information. When the first electronic device detects that the second calling information is the same as the first called information, and the second called information is the same as the first calling information, it is determined that a current scenario is the call scenario shown in FIG. 3.

For a scenario shown in FIG. 3 that two communication parties dial each other, the first electronic device may select a to-be-rejected call request from the first call request sent by the first electronic device and the second call request received by the first electronic device.

To avoid the two communication parties hanging up on each other to cause a call process to fail to be established, in embodiments of this application, a method may be provided for the two communication parties to select a to-be-rejected call request.

Specifically, in an actual scenario, for any call request, parameter information carried in the call request further includes a session identifier Callid. Callid may be for uniquely identifying a session. Based on this, in embodiments of this application, during selecting a to-be-rejected call request, the to-be-rejected call request may be selected from the two call requests according to a value comparison result between a first session identifier carried in the first call request and a second session identifier carried in the second call request. For example, a call request carrying a session identifier having a greater value may be used as the to-be-rejected call request, and is rejected. Alternatively, a call request carrying a session identifier having a less value may be used as the to-be-rejected call request, and is rejected.

After the to-be-rejected call request is rejected, further, for the other call request, the first electronic device may establish a call process normally. The second call request being retained is used as an example. The first electronic device may display a first waiting-for-answering screen. The first waiting-for-answering screen may include an identifier corresponding to the second electronic device. At the same time, the second electronic device may display a dialing screen. After the first electronic device sends a 180 Ringing message to the second electronic device, the second electronic device plays a waiting-for-answering alert tone, and at the same time the first electronic device start to ring. The first electronic device connects the second electronic device in response to a first operation performed by a user on the first waiting-for-answering screen. The first operation may be a trigger operation for an answer button.

According to the foregoing technical solution, in a scenario that two communication parties dial each other, a session process may be retained effectively, to avoid the two parties hanging up on each other to cause a call process to fail to be established.

According to another embodiment of this application, a call control system is further provided. The call control system may include a first electronic device, a second electronic device, and a third electronic device.

In a possible implementation, the first electronic device may be configured to receive a first call from the second electronic device at a first time point, and display a first waiting-for-answering screen, where the first waiting-for-answering screen includes an identifier corresponding to the second electronic device. An identifier corresponding to the second electronic device may be a phone number of the second electronic device.

The third electronic device may be configured to send a second call to the first electronic device at a second time point, and display a dialing screen. The first electronic device does not answer the first call at the second time point, and the second time point is later than the first time point.

The first electronic device is further configured to answer the first call from the second electronic device at a third time point in response to a first operation performed by the user on the first waiting-for-answering screen. The first operation may be, for example, a tapping operation performed by the user on an answer button. Then, the first electronic device may display a second waiting-for-answering screen. The second waiting-for-answering screen may include an identifier corresponding to the third electronic device. The identifier corresponding to the third electronic device may include a phone number of the third electronic device. The third time point is later than the second time point.

Further, the third electronic device may be configured to play a waiting-for-answering alert tone.

The first electronic device may be further configured to answer the second call in response to a second operation performed by the user on the second waiting-for-answering screen. The second operation may be, for example, a tapping operation performed by the user on an answer button. Alternatively, the second operation may alternatively be a switching operation performed by the user on a call object.

The second electronic device is further configured to play a waiting alert tone after the first electronic device answers the second call.

In another possible implementation, the first electronic device is configured to send a first call to the second electronic device at a first time point, and display a dialing screen. The second electronic device may be configured to display a first waiting-for-answering screen. The first waiting-for-answering screen may include an identifier corresponding to first electronic device. The identifier corresponding to the first electronic device may be a phone number of the first electronic device.

The third electronic device may be configured to send a second call to the first electronic device at a second time point, and display a dialing screen. The second electronic device does not answer the first call at the second time point, and the second time point is later than the first time point.

The second electronic device is further configured to answer the first call from the first electronic device at the third time point in response to a first operation performed by the user on the first waiting-for-answering screen. The first operation may be, for example, a tapping operation performed by the user on an answer button.

Then, the first electronic device may display a second waiting-for-answering screen. The second waiting-for-answering screen may include an identifier corresponding to the third electronic device. The identifier corresponding to the third electronic device may include a phone number of the third electronic device. The third time point is later than the second time point.

Further, the third electronic device may be configured to play a waiting-for-answering alert tone.

The first electronic device may be further configured to answer the second call in response to a second operation performed by the user on the second waiting-for-answering screen. The second operation may be, for example, a tapping operation performed by the user on an answer button. Alternatively, the second operation may alternatively be a switching operation performed by the user on a call object.

The second electronic device is further configured to play a waiting alert tone after the first electronic device answers the second call.

According to the foregoing technical solutions, after a new call request is received during establishing a call, that a newly received call request is directly rejected can be avoided, and a missed call can be avoided in a scenario of call conflict.

It may be understood that, to implement the foregoing functions, the electronic device includes corresponding hardware and/or software modules for performing the functions. Steps in the examples described with reference to embodiments disclosed in this specification can be implemented by hardware or a combination of hardware and computer software in this application. Whether a function is performed by the hardware or hardware driven by computer software depends on particular applications and design constraints of the technical solutions. A person skilled in the art may use different methods to implement the described functions with reference to embodiments for each particular application.

In embodiments, the electronic device may be divided into function modules according to the foregoing method example. For example, each function module may be obtained through division based on each corresponding function, or two or more functions may be integrated into one processing module. The integrated module may be implemented in a form of hardware. It should be noted that, in the embodiment, the module division is an example, and is merely logical function division, and there may be other division modes during actual implementation.

When function modules are obtained through division by using corresponding functions, FIG. 15 is a schematic diagram of possible composition of an electronic device related to the foregoing embodiments. As shown in FIG. 15, the electronic device 600 may include a first receiving unit 601, a second receiving unit 602, a display unit 603, and a response unit 604.

The first receiving unit 601 is configured to receive, a first call from a second electronic device at a first time point, and display a first waiting-for-answering screen in the display unit 603, where the first waiting-for-answering screen includes an identifier corresponding to the second electronic device.

The second receiving unit 602 is configured to receive a second call from a third electronic device at a second time point, where a first electronic device does not answer the first call at the second time point, and the second time point is later than the first time point.

The display unit 603 is configured to display a second waiting-for-answering screen when the first receiving unit 601 answers the first call at a third time point, where the second waiting-for-answering screen includes an identifier corresponding to the third electronic device, and the third time point is later than the second time point.

The response unit 604 is configured to answer the second call in response to a first operation on the second waiting-for-answering screen.

In a possible implementation, the first receiving unit 601 is specifically configured to answer the first call from the second electronic device in response to a second operation on the first waiting-for-answering screen.

In a possible implementation, after the response unit 604 answers the second call, the display unit 603 is further configured to display a call screen of the second call. The response unit 604 is further configured to resume a call with the second electronic device in response to a third operation on the call screen of the second call.

In a possible implementation, the second receiving unit 602 is further configured to perform first signaling exchange with the third electronic device at a fourth time point.

In a possible implementation, first signaling exchange includes complete signaling exchange required to establish a call. The fourth time point is later than the third time point, duration between the fourth time point and the second time point is less than a first waiting threshold, and the first waiting threshold is determined according to a timeout threshold of the second call.

In a possible implementation, the first signaling exchange includes a part of signaling exchange required to establish a call. The fourth time point is later than the second time point, and is earlier than the third time point, duration between the fourth time point and the second time point is equal to a first waiting threshold.

In a possible implementation, the second receiving unit 602 is further configured to perform second signaling exchange with the third electronic device at a fifth time point, where the second signaling exchange includes complete signaling exchange required to establish a call after the first signaling exchange. The fifth time point is later than the third time point, duration between the fifth time point and the fourth time point is less than a second waiting threshold, and the second waiting threshold is determined according to a timeout threshold of a first response.

In a possible implementation, when the first receiving unit 601 does not answer the first call at the third time point, the display unit 603 is further configured to display, by the first electronic device, the second waiting-for-answering screen at a sixth time point, where the sixth time point is later than the third time point.

It should be understood that the electronic device here is embodied in a form of a functional unit. The term "unit" here may be implemented in a form of software and/or hardware. This is not specifically limited. For example, the "unit" may be a software program, a hardware circuit, or a combination of the software program and the hardware circuit for implementing the foregoing functions. The hardware circuit may include an application specific integrated circuit (application specific integrated circuit, ASIC), an electronic circuit, a processor (for example, a shared processor, a dedicated processor, or a packet processor) configured to execute one or more software or firmware programs, a memory, a combined logical circuit, and/or another suitable component that supports the described functions.

This application further provides an electronic device. The device includes a storage medium and a central processing unit. The storage medium may be a non-volatile storage medium, and a computer-executable program is stored in the storage medium. The central processing unit is connected to the non-volatile storage medium, and executes the computer-executable program to implement the call control method.

This application further provides a computer-readable storage medium. The computer-readable storage medium stores instructions. When the instructions are run on a computer, the computer is enabled to perform steps of the call control method according to this application.

This application further provides a computer program product including instructions. When the computer program product runs on a computer or at least one processor, the computer is enabled to perform steps of the call control method according to this application.

This application further provides a chip, including a processor and a data interface. The processor reads, by using the data interface, instructions stored in a memory, to perform a corresponding operation and/or procedure in the call control method provided in this application.

Optionally, the chip further includes the memory. The memory is connected to the processor through a circuit or a wire. The processor is configured to read and execute a computer program in the memory. Further, optionally, the chip further includes a communication interface, and the processor is connected to the communication interface. The communication interface is configured to receive data and/or information to be processed. The processor obtains the data and/or the information from the communication interface, and processes the data and/or the information. The communication interface may be an input/output interface.

The memory may be a read-only memory (read-only memory, ROM), another type of static storage device that can store static information and instructions, a random access memory (random access memory, RAM), or another type of dynamic storage device that can store information and instructions, or may alternatively be an electrically erasable programmable read-only memory (electrically erasable programmable read-only memory, EEPROM), a compact disc read-only memory (compact disc read-only memory, CD-ROM), or another compact disc storage, an optical disc storage (including a compressed optical disc, a laser disc, an optical disc, a digital versatile optical disc, a Blu-ray disc, and the like), a magnetic disk storage medium or another magnetic storage device, or may be any another medium that can be configured to carry or store expected program code in a form of an instruction or a data structure and that can be accessed by a computer.

In embodiments of this application, the term "and/or" describes an association relationship of associated objects, and indicates that three relationships may exist. For example, A and/or B may indicate the following three cases: Only A exists, both A and B exist, and only B exists. A and B may be singular or plural. The character "/" in this specification generally indicates an "or" relationship between the associated objects. "At least one of the following" or similar expressions refer to any combination of these items, including a single item or any combination of a plurality of items. For example, at least one of a, b, and c may represent: a, b, c, a-b, a-c, b-c, or a-b-c, where a, b, and c may be single or multiple.

A person of ordinary skill in the art may be aware that the units and algorithm steps described in embodiments disclosed herein can be implemented by a combination of electronic hardware, computer software, and electronic hardware. Whether the functions are performed by hardware or software depends on particular applications and design constraint conditions of the technical solutions. A person skilled in the art may use different methods to implement the described functions for each particular application, insofar encompassed within the scope of the invention as defined by the appended claims.

A person skilled in the art can clearly understand that for convenience and conciseness of description, for specific working processes of the foregoing systems, apparatuses and units, reference may be made to the corresponding processes in the foregoing method embodiments, and details are not described herein again.

In several embodiments provided in this application, when any function is implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, and a compact disc.

## Claims

1. A call control method, comprising:
receiving (101), by a first electronic device, a first call from a second electronic device at a first time point, and displaying a first waiting-for-answering screen, wherein the first waiting-for-answering screen comprises an identifier corresponding to the second electronic device;
receiving (102), by the first electronic device, a second call from a third electronic device at a second time point, wherein the first electronic device does not answer the first call at the second time point, and the second time point is later than the first time point;
displaying (105), by the first electronic device, a second waiting-for-answering screen at a third time point when the first electronic device answers the first call, wherein the second waiting-for-answering screen comprises an identifier corresponding to the third electronic device, and the third time point is later than the second time point;
answering, by the first electronic device, the second call in response to a first operation in the second waiting-for-answering screen; the method being **characterized in that** it further comprises the step of
performing, by the first electronic device and the third electronic device, first signaling exchange at a fourth time point,
wherein the first signaling exchange comprises complete signaling exchange required to establish a call, and
the fourth time point is later than the third time point, duration between the fourth time point and the second time point is less than a first waiting threshold, and the first waiting threshold is determined according to a timeout threshold of the second call,
or
wherein the first signaling exchange comprises a part of signaling exchange required to establish a call; and
the fourth time point is later than the second time point, and is earlier than the third time point, duration between the fourth time point and the second time point is equal to a first waiting threshold.

2. The method according to claim 1, wherein the answering, by the first electronic device, the first call comprises:
answering, by the first electronic device, the first call from the second electronic device in response to a first operation in the first waiting-for-answering screen.

3. The method according to claim 1, wherein after the receiving (102), by the first electronic device, the second call, the method further comprises:
displaying, by the first electronic device, a call screen of the second call; and
resuming, by the first electronic device, a call with the second electronic device in response to a third operation on the call screen of the second call.

4. The method according to claim 1,
wherein after the performing, by the first electronic device and the third electronic device, first signaling exchange at a fourth time point, the method further comprises:
performing, by the first electronic device and the third electronic device, second signaling exchange at a fifth time point, wherein the second signaling exchange comprises complete signaling exchange required to establish a call after the first signaling exchange; and
the fifth time point is later than the third time point, duration between the fifth time point and the fourth time point is less than a second waiting threshold, and the second waiting threshold is determined according to a timeout threshold of the first signaling exchange.

5. The method according to claim 1, wherein at the third time point, when the first electronic device does not answer the first call, the method further comprises:
displaying, by the first electronic device, the second waiting-for-answering screen at a sixth time point, wherein the sixth time point is later than the third time point.

6. An electronic device, comprising a memory configured to store program instructions and a processor configured to execute the program instructions, wherein when the program instructions are executed by the processor, the electronic device is triggered to perform the method according to any one of claims 1 to 5.

7. A chip, comprising a processor and a data interface, wherein the processor read, via the data interface, instructions stored on a memory to perform the method according to any one of claims 1 to 5.

8. A storage medium, having program instructions stored thereon, the program instructions, when run on an electronic device, causing the electronic device to perform the method according to any one of claims 1 to 5.

## Patentansprüche

1. Anrufsteuerungsverfahren, umfassend:
Empfangen (101), durch eine erste elektronische Vorrichtung, eines ersten Anrufs von einer zweiten elektronischen Vorrichtung zu einem ersten Zeitpunkt, und Anzeigen eines ersten Warte-auf-Antwort-Bildschirms, wobei der erste Warte-auf-Antwort-Bildschirm eine Kennung umfasst, die der zweiten elektronischen Vorrichtung entspricht;
Empfangen (102), durch die erste elektronische Vorrichtung, eines zweiten Anrufs von einer dritten elektronischen Vorrichtung zu einem zweiten Zeitpunkt, wobei die erste elektronische Vorrichtung den ersten Anruf zum zweiten Zeitpunkt nicht beantwortet und der zweite Zeitpunkt später als der erste Zeitpunkt ist;
Anzeigen (105), durch die erste elektronische Vorrichtung, eines zweiten Warte-auf-Antwort-Bildschirms zu einem dritten Zeitpunkt, wenn die erste elektronische Vorrichtung den ersten Anruf beantwortet, wobei der zweite Warte-auf-Antwort-Bildschirm eine Kennung umfasst, die der dritten elektronischen Vorrichtung entspricht, und der dritte Zeitpunkt später als der zweite Zeitpunkt ist;
Beantworten, durch die erste elektronische Vorrichtung, des zweiten Anrufs als Reaktion auf eine erste Operation in dem zweiten Warte-auf-Antwort-Bildschirm; wobei das Verfahren **dadurch gekennzeichnet ist, dass** es ferner den Schritt umfasst des
Durchführens, durch die erste elektronische Vorrichtung und die dritte elektronische Vorrichtung, eines ersten Signalisierungsaustauschs zu einem vierten Zeitpunkt,
wobei der erste Signalisierungsaustausch einen vollständigen Signalisierungsaustausch umfasst, der erforderlich ist, um einen Anruf aufzubauen, und
der vierte Zeitpunkt später als der dritte Zeitpunkt ist, die Dauer zwischen dem vierten Zeitpunkt und dem zweiten Zeitpunkt geringer als ein erster Warteschwellenwert ist und der erste Warteschwellenwert gemäß einem Zeitüberschreitungsschwellenwert des zweiten Anrufs bestimmt wird,
oder
wobei der erste Signalisierungsaustausch einen Teil eines Signalisierungsaustauschs umfasst, der erforderlich ist, um einen Anruf aufzubauen; und
der vierte Zeitpunkt später als der zweite Zeitpunkt ist und früher als der dritte Zeitpunkt ist, wobei die Dauer zwischen dem vierten Zeitpunkt und dem zweiten Zeitpunkt gleich einem ersten Warteschwellenwert ist.

2. Verfahren nach Anspruch 1, wobei das Beantworten, durch die erste elektronische Vorrichtung, des ersten Anrufs umfasst:
Beantworten, durch die erste elektronische Vorrichtung, des ersten Anrufs von der zweiten elektronischen Vorrichtung als Reaktion auf eine erste Operation in dem ersten Warte-auf-Antwort-Bildschirm.

3. Verfahren nach Anspruch 1, wobei das Verfahren nach dem Empfangen (102), durch die erste elektronische Vorrichtung, des zweiten Anrufs ferner umfasst:
Anzeigen, durch die erste elektronische Vorrichtung, eines Anrufbildschirms des zweiten Anrufs; und
Wiederaufnehmen, durch das erste elektronische Gerät, eines Anrufs mit dem zweiten elektronischen Gerät als Reaktion auf eine dritte Bedienung auf dem Anrufbildschirm des zweiten Anrufs.

4. Verfahren nach Anspruch 1, wobei nach dem Durchführen eines ersten Signalisierungsaustauschs zu einem vierten Zeitpunkt durch das erste elektronische Gerät und das dritte elektronische Gerät das Verfahren ferner umfasst:
Durchführen eines zweiten Signalisierungsaustauschs zu einem fünften Zeitpunkt durch das erste elektronische Gerät und das dritte elektronische Gerät, wobei der zweite Signalisierungsaustausch einen vollständigen Signalisierungsaustausch umfasst, der erforderlich ist, um einen Anruf nach dem ersten Signalisierungsaustausch aufzubauen; und
der fünfte Zeitpunkt liegt nach dem dritten Zeitpunkt, die Dauer zwischen dem fünften Zeitpunkt und dem vierten Zeitpunkt ist kleiner als ein zweiter Warteschwellenwert, und der zweite Warteschwellenwert wird gemäß einem Zeitüberschreitungsschwellenwert des ersten Signalisierungsaustauschs bestimmt.

5. Verfahren nach Anspruch 1, wobei zum dritten Zeitpunkt, wenn das erste elektronische Gerät den ersten Anruf nicht entgegennimmt, das Verfahren ferner umfasst:
Anzeigen des zweiten Warten-auf-Antwort-Bildschirms zu einem sechsten Zeitpunkt durch das erste elektronische Gerät, wobei der sechste Zeitpunkt nach dem dritten Zeitpunkt liegt.

6. Elektronisches Gerät, umfassend einen Speicher, der zum Speichern von Programmanweisungen konfiguriert ist, und einen Prozessor, der zum Ausführen der Programmanweisungen konfiguriert ist, wobei bei Ausführung der Programmanweisungen durch den Prozessor das elektronische Gerät ausgelöst wird, um das Verfahren nach einem der Ansprüche 1 bis 5 durchzuführen.

7. Chip, umfassend einen Prozessor und eine Datenschnittstelle, wobei der Prozessor über die Datenschnittstelle Anweisungen liest, die in einem Speicher gespeichert sind, um das Verfahren nach einem der Ansprüche 1 bis 5 durchzuführen.

8. Speichermedium mit darauf gespeicherten Programmanweisungen, wobei die Programmanweisungen bei Ausführung auf einem elektronischen Gerät das elektronische Gerät veranlassen, das Verfahren nach einem der Ansprüche 1 bis 5 durchzuführen.

## Revendications

1. Procédé de contrôle d'appel, comprenant :
la réception (101), par un premier dispositif électronique, d'un premier appel provenant d'un deuxième dispositif électronique à un premier instant, et l'affichage d'un premier écran d'attente de réponse, dans lequel le premier écran d'attente de réponse comprend un identifiant correspondant au deuxième dispositif électronique ;
la réception (102), par le premier dispositif électronique, d'un deuxième appel provenant d'un troisième dispositif électronique à un deuxième instant, dans lequel le premier dispositif électronique ne répond pas au premier appel au deuxième instant, et le deuxième instant est postérieur au premier instant ;
l'affichage (105), par le premier dispositif électronique, d'un deuxième écran d'attente de réponse à un troisième instant lorsque le premier dispositif électronique répond au premier appel, dans lequel le deuxième écran d'attente de réponse comprend un identifiant correspondant au troisième dispositif électronique, et le troisième instant est postérieur au deuxième instant ;
la réponse, par le premier dispositif électronique, au deuxième appel en réponse à une première opération dans le deuxième écran d'attente de réponse ; le procédé étant **caractérisé en ce qu'**il comprend en outre l'étape de
réalisation, par le premier dispositif électronique et le troisième dispositif électronique, d'un premier échange de signalisation à un quatrième instant,
dans lequel le premier échange de signalisation comprend un échange de signalisation complet requis pour établir un appel, et
le quatrième instant est postérieur au troisième instant, la durée entre le quatrième instant et le deuxième instant est inférieure à un premier seuil d'attente, et le premier seuil d'attente est déterminé selon un seuil de temporisation du deuxième appel,
ou
dans lequel le premier échange de signalisation comprend une partie d'échange de signalisation requis pour établir un appel ; et
le quatrième instant est postérieur au deuxième instant, et est antérieur au troisième instant, la durée entre le quatrième instant et le deuxième instant est égale à un premier seuil d'attente.

2. Procédé selon la revendication 1, dans lequel la réponse, par le premier dispositif électronique, au premier appel comprend :
la réponse, par le premier dispositif électronique, au premier appel provenant du deuxième dispositif électronique en réponse à une première opération dans le premier écran d'attente de réponse.

3. Procédé selon la revendication 1, dans lequel après la réception (102), par le premier dispositif électronique, du deuxième appel, le procédé comprend en outre :
l'affichage, par le premier dispositif électronique, d'un écran d'appel du deuxième appel ; et
reprendre, par le premier dispositif électronique, un appel avec le deuxième dispositif électronique en réponse à une troisième opération sur l'écran d'appel du deuxième appel.

4. Le procédé selon la revendication 1, dans lequel après l'exécution, par le premier dispositif électronique et le troisième dispositif électronique, d'un premier échange de signalisation à un quatrième point temporel, le procédé comprend en outre :
l'exécution, par le premier dispositif électronique et le troisième dispositif électronique, d'un deuxième échange de signalisation à un cinquième point temporel, dans lequel le deuxième échange de signalisation comprend l'échange de signalisation complet requis pour établir un appel après le premier échange de signalisation ; et
le cinquième point temporel est postérieur au troisième point temporel, la durée entre le cinquième point temporel et le quatrième point temporel est inférieure à un deuxième seuil d'attente, et le deuxième seuil d'attente est déterminé selon un seuil d'expiration du premier échange de signalisation.

5. Le procédé selon la revendication 1, dans lequel au troisième point temporel, lorsque le premier dispositif électronique ne répond pas au premier appel, le procédé comprend en outre :
l'affichage, par le premier dispositif électronique, du deuxième écran d'attente de réponse à un sixième point temporel, dans lequel le sixième point temporel est postérieur au troisième point temporel.

6. Un dispositif électronique, comprenant une mémoire configurée pour stocker des instructions de programme et un processeur configuré pour exécuter les instructions de programme, dans lequel, lorsque les instructions de programme sont exécutées par le processeur, le dispositif électronique est déclenché pour mettre en œuvre le procédé selon l'une quelconque des revendications 1 à 5.

7. Une puce, comprenant un processeur et une interface de données, dans laquelle le processeur lit, via l'interface de données, des instructions stockées sur une mémoire pour mettre en œuvre le procédé selon l'une quelconque des revendications 1 à 5.

8. Un support de stockage, sur lequel sont stockées des instructions de programme, les instructions de programme, lorsqu'elles sont exécutées sur un dispositif électronique, amenant le dispositif électronique à mettre en œuvre le procédé selon l'une quelconque des revendications 1 à 5.
